Europäisches Patentamt

(19) European Patent Office

Office européen des brevets

(11) Publication number: **0 171 870**
**B1**

(12) **EUROPEAN PATENT SPECIFICATION**

(45) Date of publication of patent specification: 15.06.88

(21) Application number: 85302355.4

(22) Date of filing: 03.04.85

(51) Int. Cl.⁴: **B 67 B 7/48, B 67 B 7/86, B 67 D 3/04, F 16 K 31/528, B 65 D 77/06**

(54) **Liquid dispensing taps.**

(30) Priority: **04.04.84 ZA 842513**

(43) Date of publication of application:
**19.02.86 Bulletin 86/08**

(45) Publication of the grant of the patent:
**15.06.88 Bulletin 88/24**

(84) Designated Contracting States:
**DE FR GB IT**

(56) References cited:
**EP-A-0 053 891**
**EP-A-0 124 268**
**DE-C- 505 294**
**LU-A- 50 828**

(73) Proprietor: **Marley Technical Products (Proprietary) Limited**
**Corner Kelly and Innes Roads Jet Park**
**Elandsfontein Transvaal (ZA)**

(72) Inventor: **Safarik, Jiri**
**3 Kakelaar Street Birchacres**
**Kempton Park Transvaal (ZA)**

(74) Representative: **Godwin, Edgar James et al**
**MARKS & CLERK 57-60 Lincoln's Inn Fields**
**London, WC2A 3LS (GB)**

Courier Press, Leamington Spa, England.

**Description**

This invention relates to liquid dispensing taps of the kind used in bag-in-the-box systems.

In one known system of the kind in question a beverage is contained in a bag to which there is secured a gland mounting on the side of the box containing the bag. At the base of the gland there is a frangible diaphragm. For dispensing the beverage, a tap is inserted into the gland. The tap carries a piercing stem which upon such insertion breaks the diaphragm so that the tap has access to the liquid in the bag. Known taps of the kind in question are made of a number of parts in excess of two.

EP—A—0 053 891 discloses a tap for use with a bag-in-the-box system in which the bag has secured to it a socket so that bag material forms a diaphragm at the base of the socket, the tap being able to clip tightly into the socket, being provided with a piercing tool for piercing the diaphragm and comprising a hollow valve member movable in a valve body to cause the piercing tool to operate and to cause two discharge apertures to register, the tap comprising only two members, the valve member and the valve body, the piercing tool being integral with the valve member.

In accordance with the present invention, the valve member and the valve body have interengaging formations, being a projection and a groove, with the projection adapted to run in the groove and rotation of the valve member relative to the valve body causing the tool to pierce the diaphragm and to bring the apertures into and out of register to control dispensing of liquid from the bag.

Preferred and/or optional features of the invention are specified in claims 2 to 5.

The invention will be described further, by way of example, with reference to the accompanying drawings, in which:

Figure 1 is a section through a first embodiment showing a tap installed on a socket;

Figure 2 is a developmental section on the line 2—2 in Figure 1;

Figure 3 is a double section through a second and preferred embodiment;

Figure 4 is a view of the rear end of the extension; and

Figure 5 is a view similar to Figure 4 of another arrangement.

Description of Embodiments

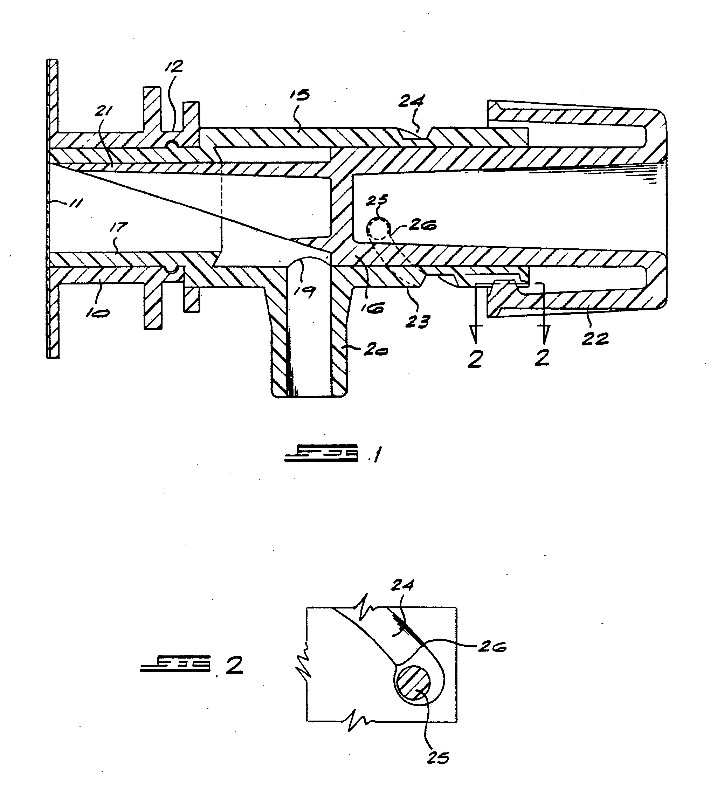

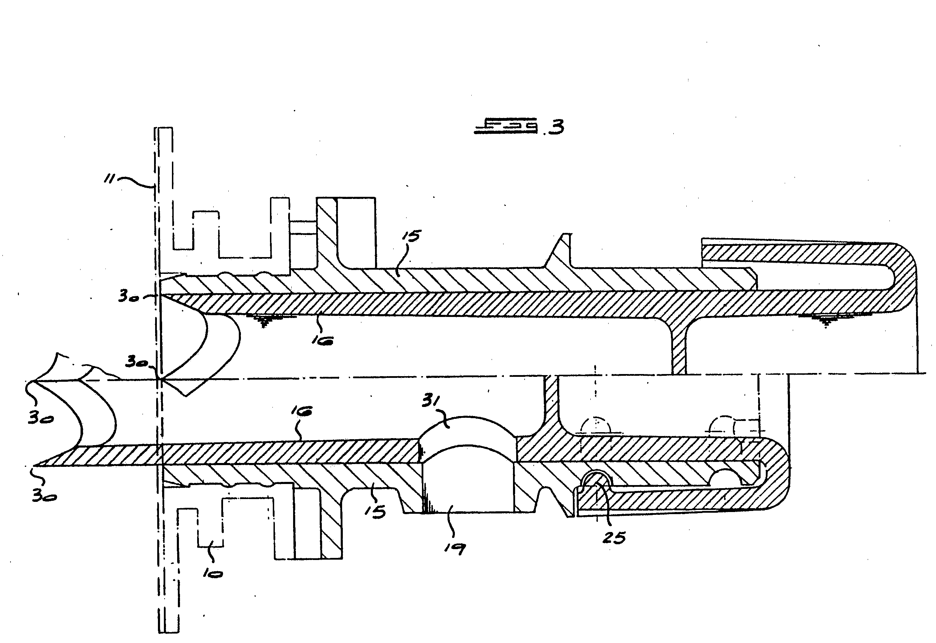

In the embodiment of Figures 1 and 2 there is a gland 10 of the known system with a frangible diaphragm 11. In use the gland 10 is secured to a bag and a box is engaged with the neck 12 of the gland.

· The tap provided by the present invention has two parts, a body 15 and a valve member 16. The body 15 is formed with a stepped bore and has a spigot end 17 which fits in the gland 10. An aperture 19 leads from the bore of the member 15 to a dispensing nozzle 20.

The valve member 16 is formed with a diaphragm piercing end 21 and an operating head 22 which passes over an extension 23 on the body 15. The outside of the extension 23 is formed with a quick thread 24. The head 22 is formed with a projection 25 in engagement with the thread 24.

At each of the start and the end of the thread 24 there is a notch with a detent shoulder 26 (See Figure 2). With the projection 25 in a notch the head 22 can only be turned after overriding a shoulder 26 with sufficient force.

In use a gland 10 is installed in a box attached to a bag with the tap composed of the two parts 15 and 16. When one wants to dispense from the bag, the head 22 is turned to override the shoulder 26 so that the end 21 pierces the diaphragm 11. At that point the aperture 19 is sealed by the valve member 16. To get liquid from the bag, the head 22 is turned in the reverse direction until the liquid flows from the nozzle 20.

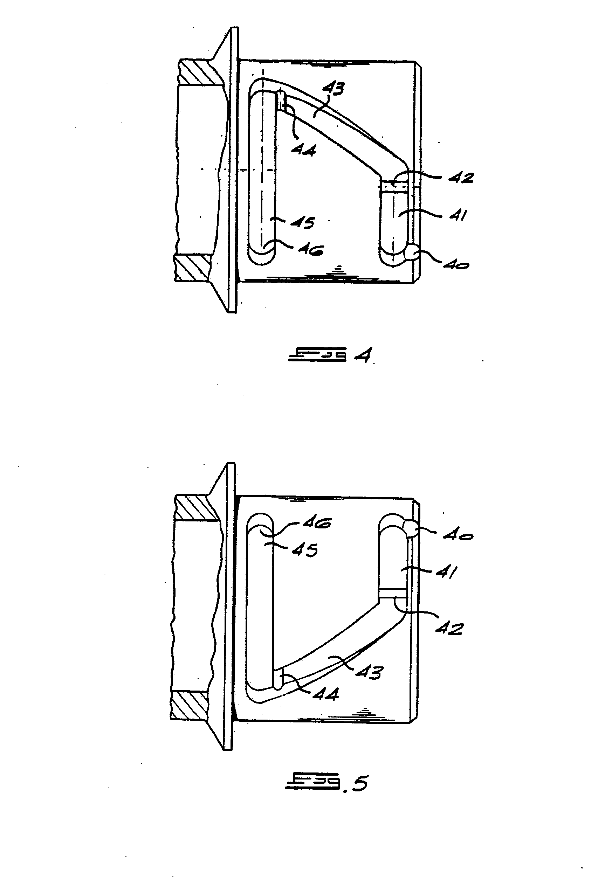

The preferred embodiment of Figures 3 to 5 differs from the first embodiment in a number of ways. It will be seen that the body 15 fits into the gland 10 in a different way, but that is not relevant to the present invention.

One major difference is that the valve member 16 is tubular almost to its end and terminates in four piercing formations 30. This construction ensures that the patch of diaphragm cut out does not form a flap which can obstruct the flow of liquid through the tap.

As a result the member 16 is formed with an aperture 31 which can register with the aperture 19 when the valve is open.

Another difference is that the projection 25 runs in grooves as illustrated in Figure 4 or Figure 5. The grooves have an entry 40 past which the projection 25 must be forced. Then there is a run-in 41 ending in a ramp 42. After the ramp 42 there is an inclined groove portion 43 also ending in a ramp 44. After the ramp 44 there is a circumferential groove portion 45.

The tap is assembled by pressing the member 16 into the body 15 in which it is a light interference fit allowing rotation of the member 16 but preventing leakage of liquid between the members. To effect assembly the member 16 is positioned with the projection 25 in register with the entry 40. Axial movement of the member 16 engages the parts. Rotary movement of the member 16 causes the projection 25 to come up against the ramp 42. When the member 16 is force rotated, the projection 25 passes over the ramp 42 into the groove portion 43. Combined axial an rotation movement brings the projection 25 against the ramp 44. The application of an axial force brings the projection 25 into the groove 45 along which it moves on rotation of the member 16.

With the projection 25 at the end 46 of the groove 45, the apertures 31 and 19 are in register in Figure 4 and the top is open. With the projection 25 at the ramp 44 the tap is closed.

With the arrangement of Figure 4 air trapped inside the tap may pass into the bag. To prevent this, the embodiment of Figure 5 may be used. In this case as the projection 25 passes the ramp 44, the apertures 31 and 19 are in register and as soon as liquid comes from the nozzle 20, the member 16 may be rotated clockwise to close off flow. Counterclockwise rotation leads to liquid being dispensed from the tap.

**Claims**

1. A tap for use with a bag-in-the-box system in which the bag has secured to it a socket so that bag material forms a diaphragm at the base of the socket, the tap being able to clip tightly into the socket, being provided with a piercing tool (21) for piercing the diaphragm and comprising a hollow valve member (16) movable in a valve body (15) to cause the piercing tool (21) to operate and to cause two discharge apertures (19, 31) to register, the tap comprising only two members, the valve member (16) and the valve body (15), the piercing tool (21) being integral with the valve member (16), characterised in that the valve member (16) and the valve body (15) have interengaging formations, being a projection (25) and a groove (24), with the projection (25) adapted to run in the groove (24), and that rotation of the valve member (16) relative to the valve body (15) causes the tool (21) to pierce the diaphragm (11) and to bring the apertures (19, 31) into and out of register to control dispensing of liquid from the bag.

2. A tap as claimed in claim 1, in which the groove (24) is helical and the apertures (19, 31) are in register when the projection (25) is at one of the ends of the groove (24).

3. A tap as claimed in claim 2, including a detent (26) at at least one end of the groove (24) which the projection (25) has to overcome before being able to move in the groove (24).

4. A tap as claimed in any of claim 1, in which the groove has a helical portion (43) running into a circumferential portion (45), with movement of the projection (25) in the circumferential portion (45) serving to bring the apertures into and out of register.

5. A tap as claimed in claim 4 in which there is a detent (44) at the junction of the said portions (43, 45) which the projection (25) has to overcome and which serves to prevent easy return of the projection (25) along the helical portion (43) on rotation of the valve member (16).

**Patentansprüche**

1. Hahn zur Verwendung in einem Schlauch-Dispensor (bag-in-the-box system), in welchem am Beutel eine Buchse derart befestigt ist, daß das Beutelmaterial an der Basis der Buchse eine Membran bildet, wobei der Hahn dicht, in die Buchse einsetzbar ist, wobei der Hahn ein Durchstech-Werkzeug (21) aufweist, um die Membran zu durchstechen, und wobei der Hahn ein hohles Ventilteil (16) aufweist, das in einem Ventilkörper (15) beweglich angeordnet ist, um das Durchstech-Werkzeug (21) zu betätigen und um zwei Ablauföffnungen (19, 31) in korrespondierende Stellung zu bringen, wobei der Hahn nur zwei Bauteile, nämlich das Ventilteil (16) und den Ventilkörper (15), aufweist, und wobei das Durchstech-Werkzeug (21) mit den Ventilteil (16) einteilig ausgebildet ist, dadurch gekennzeichnet, daß das Ventilteil (16) und der Ventilkörper (15) ineinandergreifende Elemente aufweisen, nämlich einen Vorsprung (25) und einen Schlitz (24), wobei der Vorsprung im Schlitz laufen kann und die Drehung des Ventilteiles (16) gegenüber dem Ventilkörper (15) das Werkzeug (21) die Membran durchstoßen läßt und die Öffnungen (19, 31) in überlappende Stellung und in nicht überlappende Stellung bringt, um die Abgabe von Flüssigkeit aus dem Beutel zu steuern.

2. Hahn nach Anspruch 1, in welchem der Schlitz (24) schraubenförmmig gewunden ist und die Öffnung (19, 31) in überlappender Stellung stehen wenn der Vorsprung (25) an einem Ende des Schlitzes (24) steht.

3. Hahn nach Anspruch 2, mit einer Feststellvorrichtung (26) wenigstens an einem Ende des Schlitzes (24), wobei der Vorsprung (25) diese Feststellvorrichtung überwinden muß, bevor er in den Schlitz (24) eintreten kann.

4. Hahn nach Anspruch 1, wobei der Schlitz einen schraubenförmigen Abschnitt (43) aufweist, der in einen peripher verlaufenden Abschnitt (45) einmündet, wobei die Bewegung des Vorsprungs (25) in dem peripher verlaufenden Abschnitt (45) dazu dient, die Öffnungen in überlappende Stellung und in nicht überlappende Stellung zu bringen.

5. Hahn nach Anspruch 4, in welchem am Übergang der Abschnitte (43, 45) eine Feststellvorrichtung (44) angeordnet ist, welche der Vorsprung (25) überwinden muß und welche dazu dient, ein leichtes Zurückgehen des Vorsprungs (43) längs des schraubenförmigen Abschnittes (43) beim Drehen des Ventilteiles (16) zu verhindern.

**Revendications**

1. Robinet destiné à être utilisé dans un système sac dans la boîte dans lequel une douille est fixée au sac de sorte que le matériau du sac forme un diaphragme à la base de la douille, le robinet venant s'insérer de manière étanche dans la douille, le robinet étant muni d'un outil de perçage (21) pour percer le diaphragme et comprenant une valve creuse (16) dont le mouvement dans un corps de valve (15) provoque le fonctionnement de l'outil de perçage (21), et la mise en coïncidence de deux ouvertures d'écoulement (19, 31) le robinet ne comprenant que deux pièces, la valve (16) et le corps de valve (15), l'outil de perçage ne formant qu'une pièce avec la valve (16), caractérisé en ce que la valve (16) et le corps de valve (15) présentent des organes coopérants à savoir une saillie (25) et une rainure (24), la saillie (25) étant adaptée pour suivre la rainure (24), la rotation de la valve (16) dans le corps de valve amenant l'outil (21) à percer le diaphragme (11) et amener les ouvertures (19, 31) en et hors coïncidence pour commander la distribution du liquide du sac.

2. Robinet selon la revendication 1, caractérisé en ce que la rainure (24) est hélicoïdale et que les ouvertures (19, 31) sont en coïncidence quand la saillie (25) est à l'une des extrémités de la rainure (24).

3. Robinet selon la revendication 2, caractérisé en ce qu'il comprend un épaulement de repos (26) que la saillie doit dépasser avant de pouvoir se déplacer dans la rainure.

4. Robinet selon l'une des revendications 1 à 3 caractérisé en ce que la rainure présente une portion hélicoïdale (3) débouchant dans une portion circonférentielle (45), le mouvement de la saillie (25) dans la portion circonférentielle (45) servant à mettre les ouvertures en et hors coincidence.

5. Robinet selon la revendication 4, caractérisé en ce qu'il comprend un repos (44) à la jonction desdites portions hélicoïdale (43) et circonférentielle (45) que la saillie doit franchir et qui empêche un retour facile de la saillie (25) le long de la portion hélicoïdale (43) lors de la rotation de la valve (16).

$\mathbf{FIG}.1$

$\mathbf{FIG}.2$

Fig. 3

Fig. 4

Fig. 5